# EUROPEAN PATENT SPECIFICATION

(11) **EP 0 730 114 B1**
(45) Date of publication and mention of the grant of the patent: **28.08.2002**
(21) Application number: 94900292.7
(22) Date of filing: 19.11.1993
(51) Int. Cl.: F16K 31/04

(54) **APPARATUS FOR CONTINUOUS DETECTION OF OVERLOAD IN ELECTRIC VALVE ACTUATOR**
VORRICHTUNG ZUR KONTINUIERLICHEN FESTSTELLUNG VON ÜBERLAST IN EINER BETÄTIGUNGSVORRICHTUNG EINES ELEKTRISCHEN VENTILS
APPAREIL DE DETECTION EN CONTINU D'UNE SURCHARGE DANS UN ACTIONNEUR DE SOUPAPE ELECTRIQUE

(43) Date of publication of application: 04.09.1996
(73) Proprietor: NIPPON GEAR CO., LTD., Fujisawa-shi Kanagawa 252 (JP)
(72) Inventor: WATANABE, Susumu, Kanagawa 254 (JP)
(74) Representative: Ben-Nathan, Laurence Albert
(86) International application number: PCT/JP93/01704
(87) International publication number: WO 95/014186

(56) References cited:
- EP-A- 0 303 964
- WO-A-89/07217
- DE-C- 4 239 947
- GB-A- 2 196 494
- JP-A- 2 236 075
- JP-A- 4 165 172
- JP-A- 58 013 282
- JP-A- 62 213 003

## Description

### TECHNICAL FIELD

The present invention relates to an electric valve actuator with an apparatus for continuous detection of overload in electric valve actuator which is widely used in a power plant.

### BRIEF DESCRIPTION OF THE DRAWINGS

Fig. 1 is a partially cutaway perspective view of an electric valve actuator according to the present invention;
Fig. 2 is an enlarged vertical sectional view of a main part of the actuator according to the present invention to detect torque of a motor based on thrust of a valve stem driving worm in Fig. 1; and
Fig. 3 is an enlarged vertical sectional view of a main part of the actuator according to the present invention to detect torque of a motor based on thrust of a valve stem driving stem nut in Fig. 1.

### BACKGROUND OF THE INVENTION

In a power plant or petrochemical plant, a number of valves are used and have generally electric valve actuators as drive means.

The electric valve actuator has a torque limit switch for detecting torque of more than fixed value when a valve element bites foreign material to stop a drive source, thereby avoiding damage to the valve.

As torque detecting means in an electric valve actuator, an on/off switch which acts when torque of a motor reaches to a predetermined value is generally used.

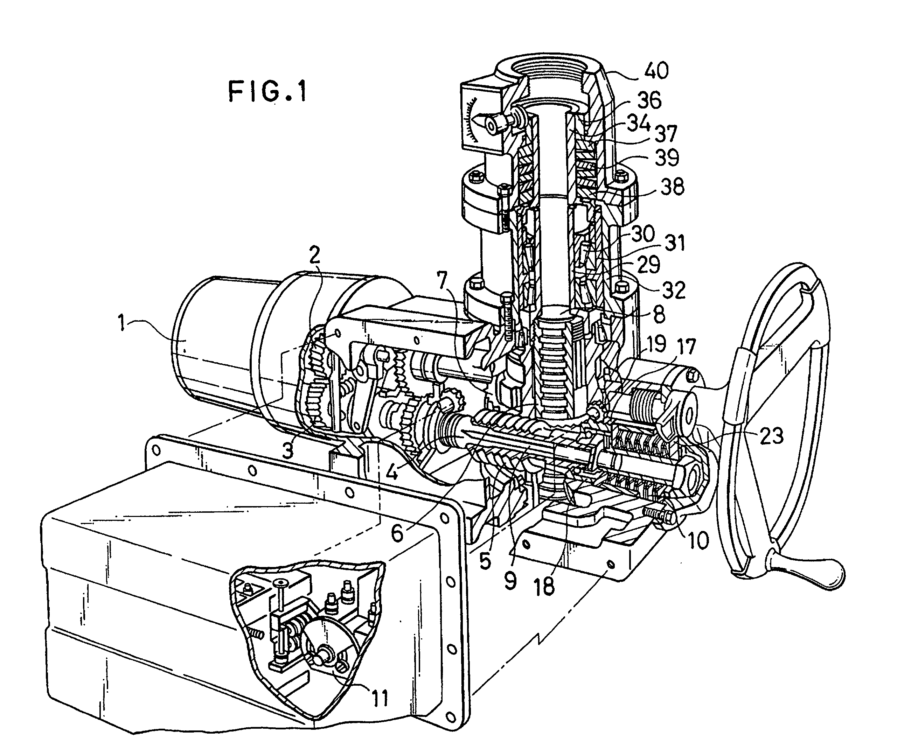

As shown in Fig. 1, rotation of a motor 1 is reduced by helical gears 2 and 3, and is transmitted to a worm wheel 7 engaged with a stem nut 6 via a cylindrical worm 5 fixedly engaged with a worm shaft 4 which is integrally connected with the rear helical gear 3. A valve stem 8 is engaged in an internal thread bore of the stem nut 6, so that the valve stem 8 is elevated and lowered by rotation of the motor 1. The worm 5 is engaged with a spline 9 of a worm shaft 4, is movable axially on the worm shaft 4, and is not relatively rotatable with the worm shaft 4. A compression spring 10 which comprises a plurality of belleville springs is engaged on the front surface of the worm 5. Depending on torque of the motor 1, the worm 5 moves on the worm shaft 4, and a compression spring 10 is compressed and displaced depending on the movement. By detecting the displacement by the torque switch 11, torque of the motor is found. Thus, when it reaches to predetermined torque, the motor 1 turns on and off by the torque switch 11, thereby preventing overload.

GB-A-2,196,494 discloses a valve actuator control mechanism wherein the movement of the worm is converted to a resistance value in a potentiometer to calculate output torque valve, thereby controlling the motor.

DE-A-42 39 947 discloses a drive unit for controlling a valve having a membrane-type disc on the worm shaft and a wire strain gauge applied on at least one side of the membrane-type disc.

### PROBLEMS TO BE SOLVED BY THE INVENTION

Such on/off type torque detecting means cannot detect torque of the motor continuously. In the meantime, without decomposing the electric actuator, there is strong need to evaluate stability of the function. To comply with such a need, it is inevitable to detect torque continuously. Furthermore, to carry out high valve control or diagnosis of stability of the torque switch itself, it is necessary to detect torque continuously. To make its size smaller, it is usual to apply preliminary pressure to the compression spring 10. Therefore, the relationship between torque of the motor 1 and displacement of the compression spring 10 is extremely non-linear. Thus, even if continuous quantity detecting means such as a potentiometer is used instead of the torque switch 11, it is impossible to detect torque of the motor continuously. Instead of or in addition to the worm 5, the stem nut 6 is axially displaced in screw-like type, and there is an apparatus wherein torque of a motor is detected by compressing a compression spring based on the displacement. However, by such an apparatus, it is still impossible to detect torque of a motor continuously.

It is an object of the present invention to provide an actuator with an apparatus wherein torque of a motor is continuously detected, thereby preventing overload.

### DISCLOSURE OF THE INVENTION

According to a first embodiment of the invention there is provided an electric valve actuator as defined by claim 1.

According to a second embodiment of the invention there is provided an electric valve actuator as defined by claim 5.

The present invention for solving the foregoing problem is characterized in that in an electric valve actuator in which a valve stem is elevated and lowered by a motor via a reduction transmission mechanism, at least part of said reduction transmission mechanism comprises a screw feeding type, a pressure receiving piece being provided for receiving thrust based on the feeding, a strain gauge being mounted on the pressure receiving piece, torque of said motor being detected by change in resistance of the strain gauge depending on deformation of said pressure receiving piece.

The screw feeding type reduction transmission mechanism are what comprises a worm and a worm wheel, and what comprises a nut and a stem meshed with the nut. That is to say, the present invention comprises two means as follows:
(1) A compression spring is displaced based on axial movement of a valve stem driving worm by thrust of the worm, and torque is detected based on the displacement.
(2) A compression spring is displaced based on axial movement of a valve stem driving stem nut by thrust of the stem nut, and torque is detected based on the displacement.

The means in (1) is characterized in that in an electric valve actuator in which a worm for rotating a stem nut for elevating and lowering a valve stem is engaged with a worm shaft rotated by a motor to rotate together with the worm shaft and to move in an axial direction, a compression spring being compressed based on axial displacement of said worm so that torque which acts on the worm is detected by the displacement, characterized in that a pressure receiving piece for receiving pressure of said compression spring is integrally connected with said worm, a strain gauge being mounted on the pressure receiving piece, torque of the motor being detected by resistance variation of the strain gauge depending on deformation of the pressure receiving piece.

Said compression spring may comprise a plurality of overlapped belleville springs. The worm may be engaged with the worm shaft to rotate together with the worm shaft and to be slidable in an axial direction.

The means in (2) is characterized in that in an electric actuator in which a valve stem for opening and closing a valve is meshed with a stem nut rotated by a motor, a compression spring is compressed by axial displacement of said stem nut, the compression force being received by a pressure receiving piece which acts on a strain gauge, torque of said motor being detected by resistance variation of the strain gauge depending on deformation of said pressure receiving piece.

### THE BEST EMBODIMENT FOR CARRYING OUT THE INVENTION

One embodiment of the present invention will be described as follows with respect to drawings.

As described with respect to Fig. 1, the worm 5 is axially moved depending on torque of the motor 1, so that the compression spring 10 is compressed.

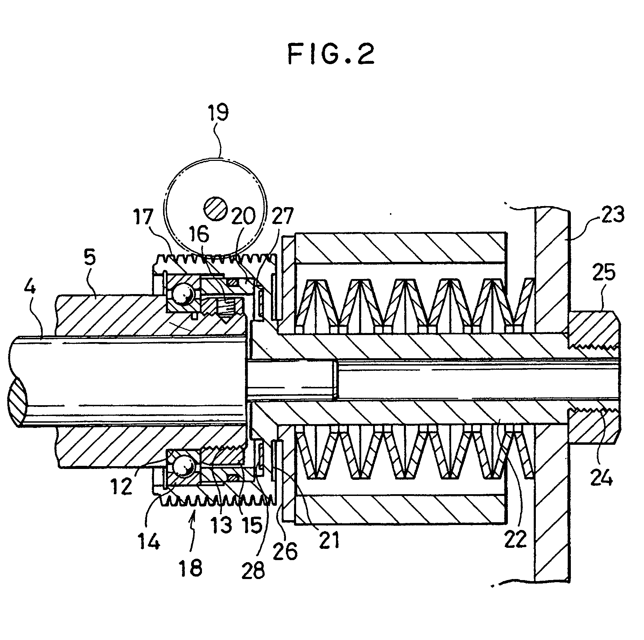

The invention will be described in detail with respect to Fig. 2.

A smaller diameter portion 12 is formed on the outer circumferential surface at the front end portion of a worm 5, and an external thread 13 is formed on the outer circumferential surface at the front end portion of the smaller diameter portion 12. A ball bearing 14 is engaged on the rear end portion of the smaller diameter portion 12, and a ring 15 is meshed with the external thread 13, so that the ball bearing 14 is fixed. On the outer circumferential surface of the ball bearing 14, a sleeve 18 with an annular rack 17 is engaged. A pinion 19 is meshed with the annular rack 17, and is connected to the torque switch 11. A holding tube 20 is engaged at the front end portion in the sleeve 18. The holding tube 20 keeps the position of the sleeve 18 suitable with respect to the ball bearing 14 and the worm 5. At the front end of the sleeve 18, a smaller diameter tubular portion 22 is formed with a'pressure receiving piece 21.

The front end of the smaller diameter tubular portion 22 is penetrated through a front wall 23 of a housing. A nut 25 is meshed with an external thread 24 of the projected end of the smaller diameter tubular portion 22, so that the smaller diameter portion 22 is not disengaged from the front wall 23 of the housing. On the rear end of the smaller diameter tubular portion 22, 'a ring-like pressure transmitting piece 26 is engaged to contact the front base portion of the pressure receiving piece 21. Between the pressure transmitting piece 26 and the front wall 23 of the housing, a compression spring 10 in which a plurality of belleville springs are overlapped is engaged at slightly compressed condition.

On the rear surface of the pressure receiving piece 21, an annular groove 27 is formed, and a strain gauge 28 is attached in the annular groove 27. Owing to axial load of the worm 5, the sleeve 18 is pushed out forwards via the ball bearing 14 and the holding tube 20, and the compression spring 10 is compressed by the pressure transmitting piece 26. Reaction force of the compression spring 10 is received by a base of the pressure receiving piece 21 via the pressure transmitting piece 26. Therefore, in the pressure receiving piece 21, axial strain in which the outer circumference goes ahead occurs, so that resistance variation which is corresponding to strain owing to reaction force of the compression spring 10 is generated. Resistance variation in the strain gauge 28 is continuously fed out as electric signal which shows torque by a conventional strain amplifier or load cell.

The foregoings relate to detection of torque of a motor, but it is not sufficient only to detect torque of an input shaft of an actuator if valve damage is to be foreseen. It is necessary to detect thrust which acts on the valve stem as continuous quantity.

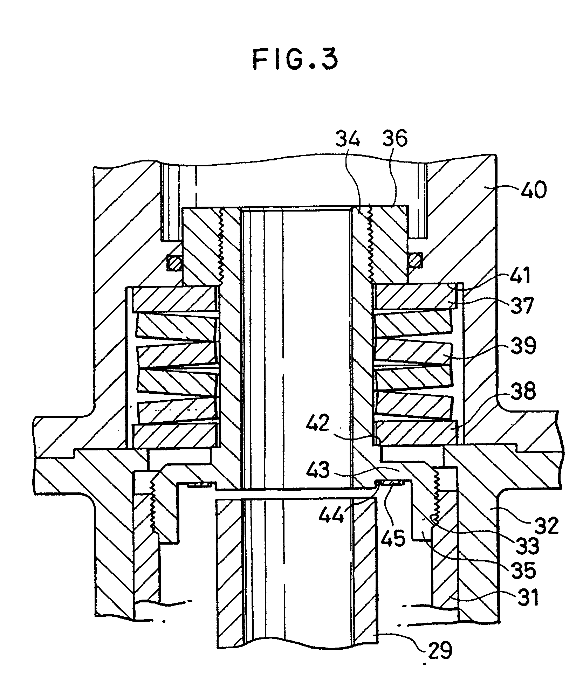

Thrust which acts on a valve can be detected through technical thought which is roughly similar to torque detection of a motor. With respect to Figs. 1 and 3, it will be described.

A thrust sleeve 29 is fixed at the upper end of the stem nut 6. The thrust sleeve 29 is disposed to be rotatable, but not to be movable along an axial direction via a tapered roller bearing 30 in a bearing cartridge 31, which is contained in an upper housing 32 not to be rotatable, but movable in an axial direction. With an internal thread bore 33 at the upper end of the bearing cartridge 31, a larger diameter tubular portion 35 at the lower end of a spring cartridge 34 is meshed and fixed. Between a pressure transmitting piece 37 engaged with the lower surface of a nut 36 which is fixed to the upper end of the spring cartridge 34, and a pressure transmitting piece 38 which is engaged on the upper surface of the upper housing 32, a compression spring 39 in which a plurality of belleville springs are overlapped is provided. The upper surface of the upper pressure transmitting piece 37 is engaged with an inward stepped portion 41 of a cover 40 which is mounted to the upper surface of the upper housing 32.

In the middle of the upper surface of larger diameter tubular portion 35 of the spring cartridge 34, a stepped portion 42 is formed, and the lower surface of the lower pressure transmitting piece 38 is engaged on the stepped portion 42. At a top wall of the larger diameter tubular portion 35, a pressure receiving piece 43 is formed, and a strain gauge 45 is attached on the upper surface of an annular groove 44 formed at the lower surface of the pressure receiving piece 43.

In the structure, when thrust necessary for operation of the valve stem 8 is changed, drive torque of the stem nut 6, and axial load which is caused by a lead angle acts on the stem nut 6.

When the load is directed upwards, the compression spring 39 is compressed via the thrust sleeve 29, the taper roller bearing 30, the bearing cartridge 31 and the spring cartridge 34. When the load is directed downwards, the compression spring is compressed via the thrust sleeve 29, the taper roller bearing 30, the bearing cartridge 31, 'the spring cartridge 34 and the nut 36. In both cases, the pressure receiving piece 43 in the larger diameter tubular portion 35 is strained by force of the compression spring 39 via the pressure transmitting piece 38 and the stepped portion 42, and strain is detected by the strain gauge 45.

### INDUSTRIAL APPLICABILITY

The present invention achieves the following advantages:
(1) Regardless of operation of the electric actuator, torque of motor can be always detected.
(2) The detecting portion comprises a smaller size, so that it can be mounted to a conventional actuator without affecting size of the main part.

## Claims

1. Electric valve actuator comprising:
- a motor (1);
- a tubular worm (5);
- a worm shaft (4) which is rotated by the motor (1) and engaged in the tubular worm (5) so that the tubular worm (5) may rotate together with and slide axially on the worm shaft (4);
- a worm wheel (7) with which the tubular worm (5) is engaged; and
- a stem nut (6) integrally connected with the worm wheel (7);
**characterized in that** said actuator further comprises an apparatus for continuous detection of load in the electric valve actuator; said apparatus consisting of:
- a compression spring (10) compressed by axial movement of said tubular worm (5) thereby detecting torque which acts on the tubular worm (5), by the movement of said tubular worm (5);
- a pressure receiving piece (21) mounted to said tubular worm (5) perpendicular to an axis of said tubular worm (5) to receive the force of said compression spring (10); and
- a strain gauge (28) mounted on the pressure receiving piece (21) so that torque of said motor (1) may be detected by resistance variation of the strain gauge (28) depending on deformation of the pressure receiving piece (21).

2. An actuator as defined in claim 1, wherein said pressure receiving piece (21) is provided on a pressure transmitting tube (18) having a rack (17), said pressure transmitting tube (18) being axially pushed by the tubular worm (5) connected with said stem nut (6) to operate a torque switch (11).

3. An actuator as defined in claim 1, wherein the compression spring (10) comprises a plurality of overlapped belleville springs.

4. An actuator as defined in claim 1, wherein the tubular worm (5) is engaged on the worm shaft (4) with a spline (9) so that the tubular worm (5) may rotate together with and slide axially on the worm shaft (4).

5. Electric valve actuator comprising:
- a motor (1);
- a tubular worm (5);
- a worm shaft (4) which is rotated by the motor (1) and engaged in the tubular worm (5) so that the tubular worm (5) may rotate together with and slide axially on the worm shaft (4);
- a worm wheel (7) with which the tubular worm (5) is engaged;
- a valve stem (8) which moves up and down to open and close a valve; and
- a stem nut (6) integrally connected with the worm wheel (7) and meshed with the valve stem (8);
**characterized in that** said actuator further comprises an apparatus for continuous detection of load in the electric valve actuator, said apparatus consisting of:
- a compression spring (39) compressed by axial movement of said stem nut (6);
- a pressure receiving piece (43) perpendicular to an axis of said valve stem (8) and receiving the compression force of the spring (39); and
- a strain gauge (45) mounted on the pressure receiving piece (43) so that torque of the valve stem (8) driven by the motor (1) may be detected by resistance variation of the strain gauge (45) depending on deformation of the pressure receiving piece (43).

## Revendications

1. Actionneur de soupape électrique comprenant :
- un moteur (1);
- une vis sans fin tubulaire (5) ; un arbre de vis sans fin (4) qui est entraîné en rotation par le moteur (1) et engrène avec la vis sans fin tubulaire (5) de telle sorte que la vis sans fin tubulaire (5) peut tourner conjointement avec et glisser axialement sur l'arbre (4) de vis sans fin;
- une roue tangente (7), avec laquelle la vis sans fin tubulaire (5) engrène;
- un écrou de tige (6) raccordé d'un seul tenant à la roue tangente (7);
**caractérisé en ce que** ledit actionneur comprend en outre un dispositif pour détecter en continu une charge dans l'actionneur de soupape électrique; ledit dispositif étant constitué par :
- un ressort de pression (10) comprimé au moyen d'un déplacement axial de ladite vis sans fin tubulaire (5) de manière à détecter un couple qui agit sur la vis sans fin tubulaire (5), au moyen du déplacement de ladite vis sans fin tubulaire (5);
- une pièce de réception de pression (21) montée sur ladite vis sans fin tubulaire (5) perpendiculairement d'un axe de ladite vis sans fin tubulaire (5) pour recevoir la force dudit ressort de pression (10); et
- une jauge de contrainte (28) montée sur la pièce de réception de pression (21) de telle sorte que le couple dudit moteur (1) peut être détecté par modification de la résistance de la jauge de contrainte (28) en fonction de la déformation de la pièce de réception de pression (21).

2. Actionneur selon la revendication 1, dans lequel ladite pièce de réception de pression (21) est prévue sur un tube (18) de transmission de pression comportant une crémaillère (17), ledit tube de transmission de pression (18) étant repoussé axialement par la vis sans fin tubulaire (5) raccordée audit écrou de tige (6) pour actionner un commutateur de couple (11).

3. Actionneur selon la revendication 1, dans lequel le ressort de compression (10) comprend une pluralité de ressorts Belleville en chevauchement.

4. Actionneur selon la revendication 1, dans lequel la vis sans fin tubulaire (5) engrène avec l'arbre de vis sans fin (4) au moyen d'une cannelure (9) de sorte que la vis sans fin tubulaire (5) peut tourner conjointement avec l'arbre de vis sans fin (4) et glisser axialement sur cet arbre.

5. Actionneur de soupape électrique comprenant :
- un moteur (1) ;
- une vis sans fin tubulaire (5);
- un arbre de vis sans fin (4) qui est entraîné en rotation par le moteur (1) et engrène avec la vis sans fin tubulaire (5) de telle sorte que la vis sans fin tubulaire (5) peut tourner conjointement avec et glisser axialement sur l'arbre (4) de la vis sans fin;
- une vis sans fin (7), dans laquelle une roue tangente (7), avec laquelle la vis sans fin tubulaire (5) engrène;
- une tige de soupape (8) qui se soulève et s'abaisse de manière à ouvrir et fermer une soupape; et
- un écrou de tige (6) qui est raccordé d'un seul tenant à la roue tangente (7) et engrène avec la tige de soupape (8);
**caractérisé en ce que** ledit actionneur comporte en outre un dispositif de détection continue de la charge dans l'actionneur de soupape électrique, ledit dispositif comprenant :
- un ressort de pression (39) comprimé par un déplacement axial dudit écrou de tige (6) ;
- une pièce de réception de pression (43) perpendiculaire audit axe de ladite tige de soupape (8) et recevant la force de compression du ressort (39); et
- une jauge de contrainte (45) montée sur la pièce de réception (43) de telle sorte qu'un couple de la tige de soupape (8) entraînée par le moteur (1) peut être détecté par une variation de la résistance de la jauge de contrainte (45) en fonction d'une déformation de la pièce de réception de pression (43).

## Patentansprüche

1. Stellglied für ein elektrisches Ventil umfassend:
- einen Motor (1);
- eine röhrenförmige Schnecke (5),
- eine Schneckenwelle (4), welche durch den Motor (1) gedreht wird und derart mit dem Innern der röhrenförmigen Schnecke (5) verbunden ist, daß die röhrenförmige Schnecke (5) zusammen mit der Schneckenwelle (4) rotieren und axial an der Schneckenwelle (4) gleiten kann;
- ein Schneckenrad (7), mit dem die röhrenförmige Schnecke (5) verbinden ist; und
- eine Schaftmutter (6), die vollständig mit dem Schneckenrad (7) verbunden ist;
**dadurch gekennzeichnet, daß** das Stellglied des weiteren eine Vorrichtung zur kontinuierlichen Detektion der Last in dem Stellglied für das elektrische Ventil aufweist; wobei die Vorrichtung aus:
- einer Kompressionsfeder (10), die durch axiale Bewegungen der röhrenförmgen Schnecke (5) zusammengedrückt wird und dabei durch die Bewegung der röhrenförmigen Schnecke (5) das Drehmoment detektiert, das auf die röhrenförmige Schnecke (5) wirkt;
- ein Druckaufnahmestück (21), das auf der röhrenförmigen Schnecke (5) rechtwinklig zu einer Achse der röhrenförmigen Schnecke (5) angebracht ist, um die Kraft der Kompressionsfeder (10) aufzunehmen; und
- einem Belastungsmeßgerät (28), das auf dem Druckaufnahmestück (21) angebracht ist, damit das Drehmoment des Motors (1) mit Hilfe von Widerstandsvariationen des Belastungsmeßgeräts (28), die von der Deformation des Druckaufnahmestücks (21) abhängen, delektiert werden kann
besteht.

2. Ein Stellglied gemäß Anspruch 1, wobei das Druckaufnahmestück (21) auf einer eine Zahnstange (17) aufweisenden Druckübertragungsröhre (18) vorgesehen ist, wobei die Druckübertragungsröhre (18) axial durch die röhrenförmige Schnecke (5), die mit der Schaftmutter (6) verbunden ist, geschoben wird, um einen Drehmomentschalter (11) zu betätigen.

3. Ein Stellglied gemäß Anspruch 1, wobei die Kompressionsfeder (10) eine Vielzahl von überlappenden, gewölbte Federscheiben umfaßt.

4. Ein Stellglied gemäß Anspruch 1, wobei die röhrenförmige Schnecke (5) mit der Schneckenwelle mittels eines Keils (9) verbunden ist, so daß die röhrenförmige Schnecke (5) zusammen mit der Schneckenwelle (4) rotieren und axial auf der Schneckenwelle (4) gleiten kann.

5. Stellglied für ein elektronisches Ventil umfassend:
- ein Motor (1);
- eine röhrenförmige Schnecke (5);
- eine Schneckenwelle (4), die durch den Motor (1) rotiert wird und in der röhrenförmigen Schnecke (5) derart mit dieser verbunden ist, so daß die röhrenförmige Schnecke (5) zusammen mit der Schneckenwelle (4) rotiert und axial auf der Schneckenwelle (4) gleiten kann;
- ein Schneckenrad (7), in das die röhrenförmige Schnecke (5) eingreift;
- ein Ventilschaft (8), der sich auf und ab bewegt, um ein Ventil zu öffnen und zu schließen; und
- eine Schaftmutter (6) die fest mit dem Schneckenrad (7) verbunden ist und in den Ventilschaft (8) eingreift;
**dadurch gekennzeichnet, daß** das Stellglied ferner eine Vorrichtung zur kontinuierlichen Detektion der Belastung in dem Stellglied für das elektrische Ventil umfaßt, wobei die Vorrichtung aus:
- einer Kompressionsfeder (39), die durch axiale Bewegungen der Schaftmutter (6) komprimiert wird;
- einem Druckaufnahmestück (43), das senkrecht zu einer Achse des Ventilschafts (8) ist und die Kompressionskraft der Feder (39) aufnimmt; und
- einem Belastungsmeßgerät (45), das auf dem Druckaufnahmestück (43) befestigt ist, so daß das Drehmoment des Ventilschaftes (8), der von dem Motor (1) angetrieben wird, durch Widerstandsänderungen des Belastungsmeßgeräts (45), die von der Deformation des Druckaufnahmestücks (43) abhängen, festgestellt werden können
besteht.
